# EUROPÄISCHE PATENTSCHRIFT

(11) **EP 0 950 217 B1**
(45) Veröffentlichungstag und Bekanntmachung des Hinweises auf die Patenterteilung: **04.06.2003**
(21) Anmeldenummer: 98962209.7
(22) Anmeldetag: 04.11.1998
(51) Int. Cl.: G06F 1/00

(54) **SYSTEM ZUM SCHUTZ EINER DATENVERARBEITUNGSEINRICHTUNG VOR UNBERECHTIGTEM ZUGRIFF**
SYSTEM FOR PROTECTING A DATA PROCESSING DEVICE FROM UNAUTHORISED ACCESS
SYSTEME SERVANT A PROTEGER UN DISPOSITIF DE TRAITEMENT DE DONNEES CONTRE UN ACCES NON AUTORISE

(30) Priorität: 06.11.1997 DE 19749090
(43) Veröffentlichungstag der Anmeldung: 20.10.1999
(73) Patentinhaber: Take off Investments B.V., NL-4818 PD Breda (DE)
(72) Erfinder: STOBBE, Anatoli, D-30890 Barsinghausen (DE); SCHELER, Norbert, D-15370 Fredersdorf (DE); WIEMANN, Ingo, D-12681 Berlin (DE)
(74) Vertreter: Körner, Peter
(86) Internationale Anmeldenummer: DE9803213
(87) Internationale Veröffentlichungsnummer: WO99024894

(56) Entgegenhaltungen:
- EP-A- 0 485 275
- WO-A-97/32284
- DE-A- 4 326 735
- DE-U- 9 320 722
- DE-U- 29 518 514
- GB-A- 2 312 040
- US-A- 4 951 249
- US-A- 4 993 068
- US-A- 5 229 764
- US-A- 5 629 981

## Beschreibung

Die Erfindung betrifft ein System zum Schutz einer mit Bedienungsvorrichtungen ausgestatteten Station einer Datenverarbeitungseinrichtung vor unberechtigtem Zugriff bzw. zur ausschließlichen Nutzung durch einen autorisierten Benutzer gemäß dem Oberbegriff des Patentanspruchs 1.

Systeme zum Schutz der Stationen einer Datenverarbeitungseinrichtung vor unberechtigtem Zugriff bzw. zur ausschließlichen Nutzung durch einen autorisierten Benutzer sind bereits bekannt. Unter dem Begriff der Datenverarbeitungseinrichtung sind dabei allgemein EDV-Anlagen zu verstehen, unter anderem Personal-Computer als Einzelgeräte oder auch Arbeitsplätze (work stations) als eine von mehreren Stationen eines Netzwerkes, bei welchem die Stationen mit einem zentralen Hauptrechner (server) vernetzt sind.

Zum Schutz von Datenverarbeitungssystemen vor unberechtigtem Zugriff ist durch das Dokument DE 40 15 482 C1 (Spalte 1, Zeilen 12 - 41) ein LOGON-Verfahren bekannt, bei welchem an einer Datenendeinrichtung des Datenverarbeitungssystems, beispielsweise über eine Eingabetastatur, Paßwörter eingegeben werden, die dem autorisierten Benutzer einerseits und dem Datenverarbeitungssystem andererseits bekannt sind. Das Datenverarbeitungssystem kann den Benutzer anhand seines eingegebenen Paßwortes identifizieren und ihm an der benutzten Datenendeinrichtung die zugewiesenen Zugriffsrechte gewähren.

Diese Lösung weist jedoch Schwächen auf, durch welche ein Paßwort verhältnismäßig leicht umgangen werden kann, da simple Paßworte in der Praxis leicht aufdeckbar sind und lange Paßworte von dem autorisierten Benutzer leicht vergessen werden können. Im letzteren Fall werden die Paßworte häufig schriftlich aufgezeichnet, wobei die Gefahr besteht, daß sie von unberechtigten Dritten erkannt und aufgedeckt werden können. Im übrigen können Paßworte bei der Eingabe über die Eingabetastatur auch durch Beobachtung der Finger des Benutzers und der Bedienung der Eingabetastatur ausgespäht werden, so daß ein optimaler Schutz des Datenverarbeitungssystems vor unberechtigten Nutzern nicht gewährleistet ist.

In dem Dokument DE 40 15 482 C1 (Spalte 1, Zeile 48 bis Spalte 2, Zeile 23) ist außerdem ein Sicherheitssystem UNISES beschrieben, welches auf eine manuelle Eingabe von Paßwörtern verzichtet und statt dessen eine automatische Autorisierung des Benutzers ermöglicht. Dazu ist ein gesonderter integrierter Schaltkreis erforderlich, der im Personal-Computer eingebaut und mit Verschlüsselungsfunktionen versehen ist. Zusätzlich wird ein Hochfrequenzsender benötigt, den der Benutzer mit sich trägt, und der eine persönliche Kennung aktiv abstrahlt, wobei die Funkverbindung durch Verschlüsselungsalgorithmen geschützt ist. Wenn der Personal-Computer einen berechtigten Nutzer identifiziert, wird aus einem weiterhin vorgesehenen Identifikationsträger die Kennung in den im Personal-Computer eingebauten integrierten Schaltkreis übertragen, und es stehen dann außer den Standardfunktionen des Personal-Computers auch die geschützten Datenbereiche zur Verfügung.

Nachteilig bei diesem Sicherheitssystem ist einerseits das Erfordernis eines batteriebetriebenen und daher nicht wartungsfreien, sowie vergleichsweise voluminösen Hochfrequenzsenders und andererseits der Umstand, daß eine spezielle Hardware in den Personal-Computer eingebaut werden muß.

Um die Sicherheit von Datenverarbeitungssystemen weiter zu verbessern, wird in dem genannten Dokument DE 40 15 482 C1 ein System beschrieben, bei welchem der Benutzer einen Identifikationsträger nach Art eines Transponders mit sich trägt, der innerhalb einer vorbestimmten Entfernung berührungslos von einem Abstandsleser abgefragt werden kann. Dabei kann ein passiver Identifikationsträger verwendet werden, und die Authentisierung des Benutzers erfolgt dadurch, daß der Abstandsleser die persönliche Nutzerkennung auf dem passiven Identifikationsträger liest.

Zusätzlich sieht dieses bekannte System vor, daß ein gesondertes Schreibgerät zu vorgegebenen Zeitpunkten - z. B. täglich - eine neue persönliche Nutzerkennung auf dem Identifikationsträger bzw. auf dem Transponder einprogrammiert und gleichzeitig auch an das Datenverarbeitungssystem übermittelt. Der Transponder wird dabei in der Nähe des Handgelenks des Benutzers angebracht.

Eine vergleichbare Lösung ist durch das Dokument EP 0 496 344 A1 bekannt, welches eine Einrichtung zur Berechtigung der Bedienung eines Gerätes mit einer Betätigungseinheit beschreibt. Die Bedienungsberechtigungsschaltung ist durch die Verwendung eines an der berechtigten Person angebrachten Transponders einerseits sowie eines Lesegerätes andererseits zweigeteilt, und sowohl der Transponder als auch das Lesegerät weisen jeweils eine Sende-Empfangseinheit zum berührungslosen Signalaustausch auf, so daß die Annäherung des Transponders an den Leser bzw. an die Bedienungseinheit eine Berechtigung herstellt und die Entfernung des Transponders die Berechtigung beendet.

Durch das Dokument EP 0 777 171 A1 ist schließlich noch eine vergleichbare Sicherheitseinrichtung als Zugangskontrolle für einen Computer bekannt, bei welcher die Benutzung nur mit einem Zugangscode ermöglicht wird, und bei welcher ebenfalls ein Transponder und ein Lesegerät verwendet werden. Dabei muß der Benutzer den Zugangscode nicht unbedingt kennen. Das Lesegerät für den Zugangscode kann auf einer äußeren Einheit wie der Maus zur Bedienung des Computers montiert sein.

Die bekannten Systeme werden allerdings den gestiegenen Sicherheitsanforderungen nicht gerecht, und sofern zusätzliche Maßnahmen an dem Computer selbst bzw. an der Datenverarbeitungseinrichtung erforderlich sind, wirkt sich dies wegen der damit verbundenen Kosten nachteilig aus. Ein wesentlicher Mangel besteht darin, daß bei den Systemen mit einem berührungslos abfragbaren Transponder im Grunde genommen nur überprüft wird, ob sich der Transponder im Wirkungsbereich des zugeordneten Lesegerätes befindet, welches die im Transponder gespeicherten Daten liest. Weitere Sicherungsmaßnahmen sind nicht vorgesehen. Es ist also für die Datenverarbeitungseinrichtung nicht erkennbar, welche Person den Transponder mit sich trägt und in den Wirkungsbereich des Lesegerätes bringt. Es ist daher ohne weiteres möglich, daß eine nicht berechtigte Person Zugriff zu der Datenverarbeitungseinrichtung erlangt, sofern diese Person nur im Besitz des betreffenden Transponders ist. Die Sicherung von Datenverarbeitungseinrichtungen vor unberechtigtem Zugriff ist bei den bekannten Systemen daher erheblich eingeschränkt.

Der Erfindung liegt die Aufgabe zugrunde, das im Oberbegriff des Patentanspruchs 1 genannte System wesentlich sicherer zu gestalten und den Schutz vor unberechtigtem Zugriff zu erhöhen, ohne daß hierfür wesentliche Veränderungen an der Station der Datenverarbeitungseinrichtung oder auch Eingriffe in die Station erforderlich sind.

Die Lösung dieser Aufgabe erfolgt durch die im kennzeichnenden Teil des Patentanspruchs 1 angegebenen Merkmale.

Gemäß der Erfindung ist das Lesegerät in die Bedienungsvorrichtung, die Station selbst oder in ein sonstiges der Station zugeordnetes Peripheriegerät integriert. Als Bedienungsvorrichtung kommen vorzugsweise Tastatur oder Maus in Betracht. Darüberhinaus sind unter Bedienungsvorrichtung aber auch Eingabetabletts, Lichtgriffel, Mikrofone oder Berührungsbildschirme zu verstehen, also alle Geräte, mit denen die Datenverarbeitungseinrichtung vom Benutzer gesteuert werden kann.

Das Lesegerät kann auch in die Station selbst integriert werden, z. B. in Form einer Steckkarte, die über einen Steckkartenbus verbunden oder in Form eines Einschubs, der an den Datenbus für Laufwerke angeschlossen wird. Dabei kann es sich um ein Kombigerät handeln, das neben seiner konventionellen Funktion auch das Lesegerät aufnimmt, als auch um eine gesondertes Zusatzgerät. Schließlich ist auch die Integration in sonstige Peripheriegeräte möglich, die Daten zur Station übertragen. Es kommen hier Eingabegeräte, wie Bildscanner, kombinierte Ein- und Ausgabegeräte, wie Modems, externe Laufwerke, aber auch reine Ausgabegeräte mit bidirektionaler Schnittstelle, wie Monitore, Drucker in Frage.

Für eine Freigabe werden sowohl die im Transponder gespeicherten Autorisierungsdaten als auch zusätzliche benutzerspezifische Identifikationsdaten ausgewertet. Wenn sowohl die Autorisierungsdaten als auch die Identifikationsdaten dabei als richtig erkannt werden, ist die Station zur Benutzung freigegeben, wobei sich diese Freigabe bei Bedarf auf bestimmte Programme und Speicher, also auf bestimmte dem jeweiligen Benutzer zugewiesene Zugriffsrechte beziehen kann.

Der grundlegende Gedanke der Erfindung besteht darin, durch die Verwendung sowohl von Autorisierungsdaten als auch von Identifikationsdaten und durch deren gemeinsame Auswertung einen doppelten Sicherheitsschutz vorzusehen. Es genügt also nicht mehr, daß sich der Transponder im Wirkungsbereich des Lesegerätes befindet, um die Benutzung der Station freizugeben, vielmehr muß sich der Benutzer zusätzlich auch noch durch Identifikationsdaten zu erkennen geben, wobei diese Identifikationsdaten vergleichbar einem Fingerabdruck einmalig sind und nur für den betreffenden Benutzer gelten können.

Die Prüfung von Autorisierungsdaten und Identifikationsdaten bietet auch die Voraussetzung, individuelle Identifikationsdaten, wie biometrische Merkmale unter Praxisbedingungen verwerten zu können. Bei individuellen Identifikationsdaten besteht nämlich das Problem, solche Merkmale auszuwerten, die eine Person möglichst eindeutig zu identifizieren erlauben. Ist diese Bedingung nicht erfüllt, so erhöhen diese Identifikationsdaten die Sicherheit nicht wesentlich, da die Identifikationsdaten vielen Personen gemeinsam ist und somit auch andere Personen Zugang erhalten können. Andererseits dürfen die Identifikationsdaten, insbesondere biometrische Merkmale nicht so eng toleriert werden, daß bei natürlichen Veränderungen der Merkmale oder Abweichungen bei der Erfassung den berechtigten Personen der Zugang verwehrt wird.

Bei der gemeinsamen Kontrolle von Identifikationsdaten und Autorisierungsdaten kann ohne Einbuße an Gesamtsicherheit bei der Prüfung der Übereinstimmung der individuellen Identifikationsdaten eine größere Toleranz zugelassen werden, als bei einer ausschließlich Verwendung individueller Identifikationsdaten. Dadurch wird die Abweiserate berechtigter Personen aufgrund vermeintlich fehlender Übereinstimmungen der erfaßten Merkmale mit den gespeicherten Daten sehr gering.

Das erfindungsgemäße System kann in einigen seiner Varianten ohne irgendwelche Veränderungen der Hardware an oder in der Station installiert werden, denn es lassen sich vorhandene Schnittstellen und Verbindungsleitungen verwenden. Für die Realisierung des Systems ist es also nicht erforderlich, die Station, also beispielsweise den Computer, extra zu öffnen und besondere Schaltungen einzubauen. Vielmehr kann der gewöhnliche Computerbenutzer das Schutzsystem in einfacher Weise mit den vorhandenen Bedienungsvorrichtungen installieren bzw. einrichten uhd auch selbst bedienen.

Gemäß einer ersten alternativen Ausgestaltung der Erfindung werden die Autorisierungsdaten und die Identifikationsdaten zur Station übertragen und beide Arten von Daten innerhalb der Station der Datenverarbeitungseinrichtung, welcher sowohl die Autorisierungsdaten als auch die Identifikationsdaten bekannt sind, ausgewertet. Wenn sowohl die Autorisierungsdaten als auch die Identifikationsdaten dabei als richtig erkannt werden, ist die Station zur Benutzung freigegeben.

Gemäß einer zweiten alternativen Ausgestaltung der Erfindung werden die Autorisierungsdaten und die Identifikationsdaten im Transponder selbst oder im Lesegerät auf Übereinstimmung geprüft. Bei Übereinstimmung werden dann Freigabedaten zur Station übertragen werden, die mit dort gespeicherten Vergleichsdaten verglichen werden. Diese Variante verlagert einen Teil des Vergleichs der gespeicherten Identifikationsdaten mit tatsächlichen Identifikationsmerkmalen in den Transponder oder das Lesegerät.

Dies kann zweckmäßig sein, wenn bei einem Netzwerk mit einer Vielzahl von Stationen und Benutzern auch eine Vielzahl von Vergleichsdatensätzen gespeichert sein muß. Bei Identifikationsdaten in Form von biometrischen Daten würde dies zu umfangreichen Datenbanken und einer hohen Rechenzeit allein für die Zugangskontrolle führen, was durch eine Vorauswahl durch dezentralen Vergleich vermeidbar ist.

Bei Integration des Lesegerät in eine von der Station örtlich abgesetzte Bedienungsvorrichtung oder in ein sonstiges der Station zugeordnetes Peripheriegerät kann dieselbe vorhandene Übertragungsstrecke und Schnittstelle zwischen der Bedienungsvorrichtung bzw. dem Peripheriegerät einerseits und der Station andererseits auch für die Datenübertragung vom Lesegerät zur Station genutzt werden.

Diese Lösung vermeidet zusätzliche störende Kabelverbindungen und gleichzeitig auch Änderungen oder Ergänzungen der Hardware der Station. Die ursprüngliche und eigentliche Funktion der Bedienungsvorrichtung oder des Peripheriegerätes bleibt dabei natürlich erhalten.

Die Datenkommunikation kann zwischen dem Lesegerät und der Station durch einen modifizierten Gerätetreiber der vorhandenen Bedienungsvorrichtung oder des vorhandenen Peripheriegerätes oder durch einen zusätzlichen Gerätetreiber hergestellt werden. Es lassen sich so die zusätzlichen Hardwarekomponenten ohne Veränderung der Hardware und des Betriebssystems der Station an das vorhandene Betriebssystem anpassen und auf diese Weise das Schutzsystem funktionell einbinden.

Vorzugsweise umfaßt das Gehäuse der Bedienungsvorrichtung oder des Peripheriegerätes eine Aufnahme- und Halterungsvorrichtung für den Transponder. Der Benutzer braucht dann den Transponder nicht mit sich zu tragen, sondern kann ihn in die Aufnahme- und Halterungsvorrichtung stecken. Das Lesegerät liest berührungslos die Daten des Transponders und sendet diese über die vorhandenen Anschlußleitungen an die Station, wo sie an die LOGIN-Prozedur des Betriebssystems übergeben werden können.

Im einfachsten Fall können die Identifikationsdaten durch Eingabe eines Paßwortes auf der Eingabetastatur erzeugt werden.

Gemäß einer weiteren vorteilhaften Ausgestaltung der Erfindung werden die Identifikationsdaten des Benutzers durch den Benutzer einzig charakterisierende biometrische Daten erzeugt. Hierfür sind mehrere biometrische Merkmale geeignet, die rein äußerlich über Sensoren erfaßt werden können.

So kann mit Hilfe einer elektronischen Kamera, welche an der betreffenden Station installiert ist, das Gesicht des Benutzers erfaßt werden. Aus den elektrischen Signalen der Kamera bzw. aus dem elektronischen Bild des Gesichtes lassen sich dann die Identifikationsdaten ableiten und dem Betriebssystem zuführen.

Zweckmäßig kann es auch sein, die biometrischen Daten des Benutzers von seiner Stimme abzuleiten und dafür an der Station ein Mikrofon anzuordnen. Aus den elektrischen Signalen des Mikrofons werden danach die Identifikationsdaten abgeleitet.

Eine weitere vorteilhafte Möglichkeit besteht darin, die Identifikationsdaten von mindestens einem Fingerabdruck oder der Hand des Benutzers abzuleiten, der damit wirklich einzigartig identifiziert ist, da jede Person einen anderen Fingeroder Handabdruck besitzt.

Die erforderlichen Sensoren können an der Station oder in einem mit der Station verbundenen Gerät oder auch am Transponder angeordnet sein.

Besonders zweckmäßig ist es, wenn in weiterer Ausgestaltung der Erfindung die Identifikationsdaten durch Kombination mindestens zweier auf unterschiedliche Art ermittelten biometrischen Daten des Benutzers bestimmt werden. So lassen sich beispielsweise die Bildsignale der Kamera und die Stimmsignale des Mikrofons und/oder auch die den Fingerabdruck charakterisierenden Signale miteinander kombinieren, um daraus eindeutig die Identifikationsdaten des Benutzers zu erzeugen.

Dabei genügt es, für die einzelnen Anteile etwa der Bilderkennung oder der Stimmerkennung vergleichsweise wenig Daten zu verwenden, auch wenn diese wenigen Daten das Gesicht bzw. die Stimme oder auch den Fingerabdruck nicht vollständig genau definieren. Es wird nämlich die Erkenntnis ausgenutzt, daß durch Kombination der vergleichsweise wenigen Bild- oder Stimmudaten gleichwohl eine hohe Identifikationssicherheit erzielt wird, und zwar weil eben diese Daten miteinander kombiniert werden. Der Vorteil liegt darin, daß die Identifizierung des Benutzers schneller erfolgen kann, als wenn man sämtliche Stimm-, Gesichts- oder Fingerabdruckdaten heranzieht, denn dies dauert wegen der erheblichen Datenfülle länger.

Vorzugsweise werden die Autorisierungsdaten und die Identifikationsdaten oder die Freigabedaten durch ein Benutzerverwaltungsprogramm im Betriebssystem der Datenverarbeitungseinrichtung geprüft. Dadurch lassen sich die vom benutzen Betriebssystem verwendeten Anmelderoutinen nutzen ohne zusätzlich in das Betriebssystem eingreifen zu müssen. Der Verzicht auf Eingriffe in das Betriebssystem erleichtert einmal die Anpassung der Gerätetreiber an unterschiedliche Betriebssysteme und Versionen und vermeidet eine sonst mögliche Inkompatibilität mit Anwendungsprogrammen.

Bei einer mit dem Betriebssystem "Windows NT" ausgestatteten Datenverarbeitungseinrichtung wird die Prüfung der Autorisierungsdaten und der Identifikationsdaten oder der Freigabedaten durch das für die Anmeldeprozedur zuständige Sicherheitssubsystem oder den "Security Manager" des Betriebssystems vorgenommen.

Durch den Programmteil "Security Manager" im Betriebssystem werden alle LOGIN-Vorgänge überwacht und alle Rechteverwaltungen und -vergaben geprüft und ausgeführt. Somit kann die LOGON-Prozedur durch einen angepaßten Gerätetreiber an den "Security Manager" des Betriebssystems übergeben und von dort aus die Freigabe der entsprechenden Rechte im Betriebssystem einschließlich der installierten Anwendungsprogramme erfolgen. Die hohe Sicherheit gegen Manipulationsmöglichkeiten, die dieses Betriebssystem auszeichnet, wird so in einfacher Weise für das erfindungsgemäße System mit ausgenutzt.

Nach einer anderen zweckmäßigen Ausgestaltung der Erfindung werden die Autorisierungsdaten kontinuierlich gelesen und somit wird die stetige Anwesenheit des Benutzers bzw. des Transponders im Wirkungsbereich des Lesegerätes überwacht. Solange die Autorisierungsdaten gelesen werden, bleibt die Zugriffsberechtigung für den Benutzer erhalten.

Eine andere zweckmäßige Ausgestaltung der Erfindung sieht eine als Timer arbeitende Zeitschaltung vor, durch welche die kontinuierliche Überwachung auf eine wählbare Zeitdauer beschränkt ist. Dadurch besteht die Möglichkeit, dem Benutzer die Nutzung der Station nur für eine zuvor gewählte Zeitdauer zu ermöglichen.

Nach einer anderen vorteilhaften Weiterbildung der Erfindung ist der Transponder berührungslos mit Zusatzdaten programmierbar, welche Bestandteil der Autorisierungsdaten sind. Zweckmäßigerweise kommen als Zusatzdaten Zeitdaten in Betracht, durch welche die Benutzungsdauer der Station vorgegeben ist, und welche auch zur Berechnung von Gebühren dienen können, wenn die betreffende Station gegen Zahlung eines Gebührenbetrages benutzt werden darf.

Die Station ist nur solange zur Benutzung freigegeben, wie vom Lesegerät die Autorisierungsdaten des Transponders gelesen werden können, wobei in zweckmäßiger Weise sowohl passive als auch aktive Transponder mit eigener Energieversorgung verwendet werden können. Bei den aktiven Transpondern ergibt sich der Vorteil, daß ein größerer Abstand zwischen dem Lesegerät und dem Benutzer möglich ist, wenn dieser den aktiven Transponder mit sich trägt.

Die größeren möglichen Abstände von bis zu mehreren Metern bringen den Vorteil, daß die Station nicht immer zwischendurch gesperrt wird, wenn der Benutzer sich aufgrund anderer zwischenzeitlicher Tätigkeiten geringfügig von der Station bzw. von der Maus entfernt.

Die stetige Anwesenheit des Benutzers bzw. die kontinuierliche Überwachung des Transponders durch das Lesegerät ist ein wichtiger Aspekt für die durch die Erfindung geschaffene doppelte Sicherheit vor unberechtigtem Zugriff. Wenn der Transponder außerhalb des Wirkungsbereiches des Lesegerätes gelangt, so daß keine Autorisierungsdaten mehr vom Lesegerät gelesen werden können, wird die Station für eine weitere Benutzung automatisch gesperrt.

Gelangt danach der Transponder bzw. die den Transponder mit sich tragende Person wieder in den Wirkungsbereich des Lesegerätes, so daß die Autorisierungsdaten gelesen und zum Betriebssystem der Station geführt werden, muß zur Erzielung einer großen Sicherheit erneut das Paßwort vom Benutzer eingegeben werden. Es ist im Rahmen der Erfindung auch möglich, den Fall vorzusehen, daß es ausreichend ist, wenn der Transponder wieder in den Wirkungsbereich des Lesegerätes gelangt, um die Station wieder freizugeben.

Zur Erhöhung des Sicherheitsschutzes sieht eine vorteilhafte Weiterbildung der Erfindung vor, daß das System nach Ablauf einer definierbaren Zeitdauer eine Aufforderung an den Benutzer veranlaßt, zumindest das Paßwort erneut einzugeben bzw. seine biometrischen Daten erneut erfassen zu lassen. So muß sich der Benutzer beispielsweise alle 30 Minuten erneut mit seinen Identifikationsdaten zu erkennen geben, damit die Station freigeschaltet bleibt.

Alternativ sieht eine andere zweckmäßige Ausgestaltung der Erfindung vor, daß die Benutzung der Station auch dann freigegeben bleibt, wenn sich der Transponder, den der Benutzer mit sich trägt, lediglich innerhalb einer kürzeren definierbaren Zeitdauer außerhalb des Wirkungsbereiches des Lesegerätes befindet und die Autorisierungsdaten während dieser Zeitdauer nicht gelesen und der Station nicht zugeführt werden können.

Diese Alternative ist insbesondere in Großraumbüros zweckmäßig, denn dort tritt häufig der Fall ein, daß sich der Benutzer für kurze Zeit so weit räumlich von seinem Arbeitsplatz und der Station entfernt, daß der von dem Benutzer getragene Transponder den Wirkungsbereich des Lesegerätes verläßt. Wenn der Transponder kurze Zeit später wieder in diesen Wirkungsbereich gelangt, kann die Prozedur einer erneuten Erkennung durch Eingabe des Paßwortes entfallen.

Eine zweckmäßige Ausgestaltung der Erfindung sieht vor, daß die tatsächliche freigegebene Benutzungdauer in der Station protokolliert und gespeichert wird und auch als Beleg ausgedruckt werden kann. Somit läßt sich ein Benutzer-Protokoll erstellen, welches auch zum Zwecke einer Gebührenberechnung herangezogen werden kann.

Eine andere vorteilhafte Ausgestaltung der Erfindung besteht darin, daß der Transponder zusätzlich zu den Autorisierungsdaten auch noch die Identifikationsdaten des Benutzers erhält, und in besonders zweckmäßiger weiterer Ausgestaltung ist der Transponder mit einem biometrischen Sensor zur elektronischen und automatischen Erfassung eines Fingerabdruckes des Benutzers versehen.

Dadurch, daß der Transponder sowohl die Autorisierungsdaten als auch die Identifikationsdaten enthält, wird die Sicherheit des Systems weiter verbessert, denn nach wie vor muß der Benutzer sich neben seinem Transponder zusätzlich mit seinen Identifikationsdaten zu erkennen geben, beispielsweise durch Eingabe seines Paßwortes. Nur wenn das Paßwort mit den im Transponder vorhandenen Identifikationsdaten, die zusammen mit den Autorisierungsdaten der Station zugeführt werden, übereinstimmt, wird die Station zur Benutzung freigegeben.

Denkbar ist aber auch eine alleinige Identifizierung durch den Fingerabdruck. Wenn der Benutzer z. B. sein Paßwort vergessen hat, kann es ausreichend sein, daß er seinen Fingerabdruck von dem biometrischen Sensor des Transponders lesen läßt. Bei Übereinstimmung, wenn also der berechtigte Benutzer seinen Fingerabdruck auf dem Transponder abgegeben hat, wird die Station freigeschaltet, ohne daß es noch der Eingabe eines Paßwortes bedarf.

Andere vorteilhafte Ausgestaltungen und Weiterbildungen der Erfindung sind den Unteransprüchen angegeben.

Anhand des in der Zeichnung dargestellten Ausführungsbeispiels wird die Erfindung nachfolgend näher erläutert Es zeigen:
- Fig. 1: ein Prinzip-Blockschaltbild einer Station als Arbeitsplatz eines Netzwerkes,
- Fig. 2: das Prinzip-Blockschaltbild nach Fig. 1 mit einer Darstellung des Informationsflusses für das Betriebssystem Windows NT,
- Fig. 3: eine schematische Ansicht einer Station gemäß Fig. 1 mit einer Eingabetastatur und einer Maus,
- Fig. 4: eine Maus mit einem Schlitz zur Aufnahme eines Transponders,
- Fig. 5: eine Maus mit einem biometrischen Sensor und einem Schlitz zur Aufnahme eines Transponders,

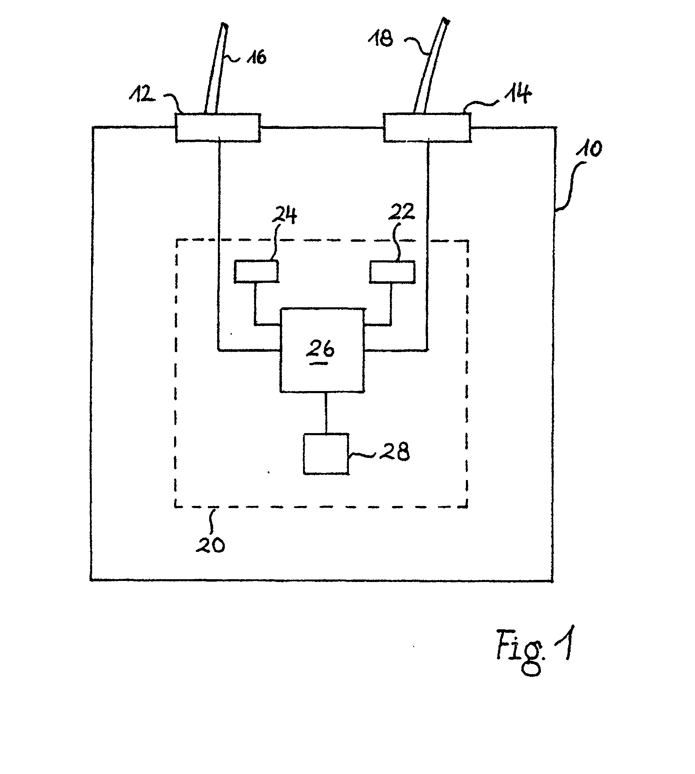

In Fig. 1 ist als schematisches Blöckschaltbild eine Station 10 als Arbeitsplatz eines Computer-Netzwerkes dargestellt, wobei nur die im Rahmen des erfindungsgemäßen Systems relevanten Teile gezeigt sind. Die Station 10 besitzt eine übliche Tastatur-Schnittstelle 12 sowie eine übliche Maus-Schnittstelle 14 mit Verbindungsleitungen 16 und 18. Die Station 10 arbeitet mit einem Betriebssystem 20, das einen Prozessor sowie mit diesem verbundene Seicher- und Ein/Ausgabeeinheiten steuert. Das Betriebssystem umfaßt Programmteile, die Zugriff auf gespeicherte Autorisierungsdaten 22 eines hier nicht dargestellten Transponders sowie Identifikationsdaten 24 eines Benutzers haben. Ferner ist ein Programmteil vorhanden, der als Vergleicher 26 für die über die Schnittstellen 12 und 14 zugeführten Daten mit den gespeicherten Autorisierungsdaten 22 und Identifikationsdaten 24 dient. Zusätzlich ist noch ein Programmteil als Timer 28 ausgebildet.

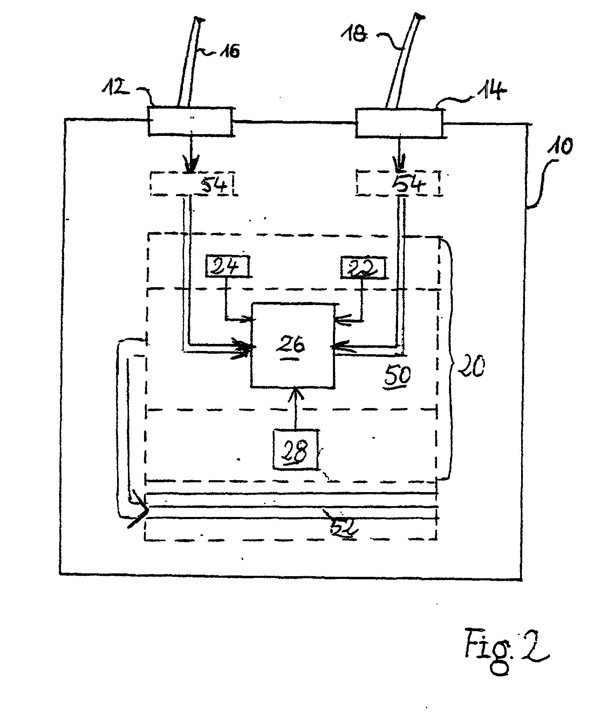

Fig. 2 zeigt das Prinzip-Blockschaltbild nach Fig. 1 mit einer Darstellung des Informationsflusses für das Betriebssystem Windows NT. Der Programmteil "Security Manager" 50 im Betriebssystem 20 überwacht alle LOGIN-Vorgänge. Dabei werden die während der Anmeldeprozedur eines Benutzers vom System angeforderten Daten mit gespeicherten Daten, die bestimmten Zugriffsrechten entsprechen, verglichen. Diese Zugriffsrechte können vom Systemverwalter, dem Administrator, bei der Einrichtung des Systems vergeben werden, aber auch später verändert werden. Je nach den vergebenen Rechten und dem Ergebnis der Prüfung erhält der Benutzer nach Abschluß der Anmeldeprozedur Zugriff auf Anwendungsprogramme 52.

Zur automatischen Einbindung der über die Tastatur-Schnittstelle 12 und/oder die Maus-Schnittstelle 14 zugeführten Autorisierungsdaten. Identifikationsdaten oder Freigabedaten in die Anmeldeprozedur dient ein Gerätetreiber, der die Kommunikation zwischen einem Lesegerät für den Transponder, einem optionalen Sensor für biometrische Daten und dem Betriebssystem herstellt. Dies kann hier ein modifizierter Tastatur und/oder Maustreiber 54 sein.

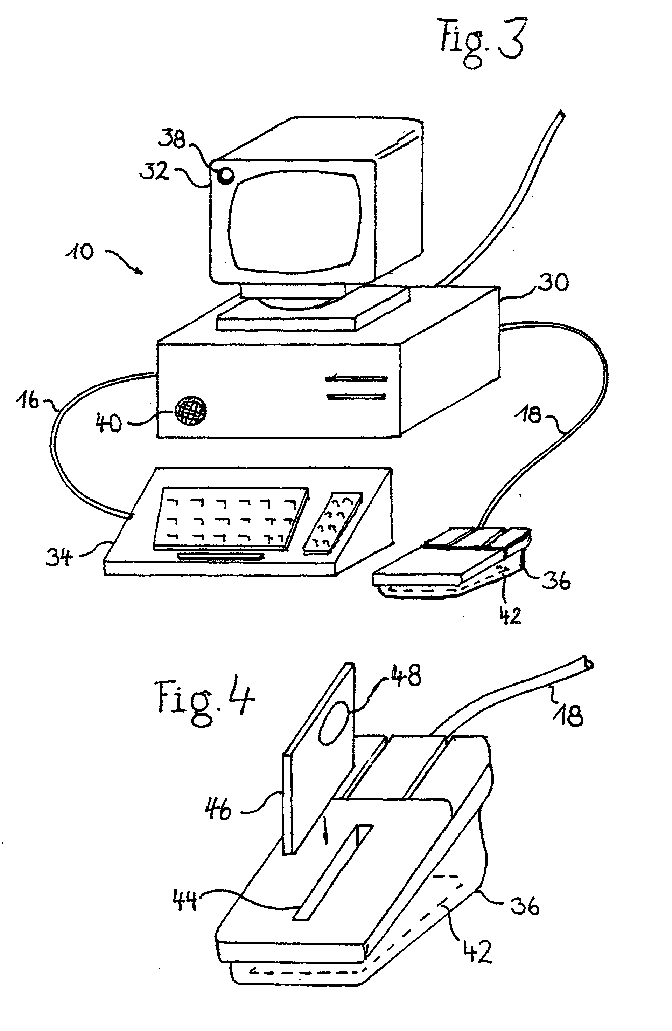

Fig. 3 zeigt in einer anderen Darstellung die Station 10 mit einem Gehäuse 30, einem Bildschirm 32 und Eingabevorrichtungen in Form einer Eingabetastatur 34 und einer Maus 36. Über die in Fig. 1 bereits dargestellte Verbindungsleitung 16 ist die Eingabetastatur 34 mit der Station 10 verbunden, und ebenso ist die Maus 36 über die Verbindungsleitung 18 angeschlossen. Innerhalb der Maus 36 befindet sich als integrierter Bestandteil ein Lesegerät 42, dessen gelesene Daten über die vorhandene Verbindungsleitung 18 und die Schnittstelle 14 zur Station 10 geführt werden. In das Gehäuse des Bildschirmes 32 ist noch eine elektronische Kamera 38 integriert, und das Gehäuse 30 umfaßt zusätzlich oder alternativ ein Mikrofon 40. Sowohl die elektronische Kamera 38 als auch das Mikrofon 40 können zur Erzeugung von biometrischen Daten des Benutzers herangezogen werden.

Fig. 4 zeigt eine Maus 36 mit einem darin integrierten Lesegerät 42, wobei die Maus 36 eine Aufnahme- und Halterungsvorrichtung 44 für einen passiven Transponder 46 umfaßt. Der Transponder 46 hat die Gestalt einer Scheckkarte und die Aufnahme- und Halterungsvorrichtung 44 ist als Aufnahmeschlitz ausgebildet. Der Transponder 46 und das Lesegerät 42 befinden sich also örtlich dicht beieinander, so daß das Lesegerät 42 durch ein elektromagnetisches Feld den Transponder 46 mit Energie versorgen und ihn aktivieren kann und die im Transponder 46 enthaltenen Autorisierungsdaten problemlos lesen und über die Verbindungsleitung 18 der Station 10 zuführen kann.

Der Transponder 46 ist programmierbar ausgebildet, so daß die gewünschten Autorisierungsdaten mit einem hier nicht näher dargestellten Sende/Empfangsgerät berührungslos in den Transponder 46 eingelesen und dort gespeichert werden können. Der Transponder 46 ist ferner mit einem biometrischen Sensor 48 auf seiner Oberfläche ausgestattet, der zur elektronischen und automatischen Erfassung eines Fingerabdruckes vorgesehen ist. Bei Berührung des Sensors 48 mit einem Finger werden aus dem Fingerabdruck Identifikationsdaten erzeugt.

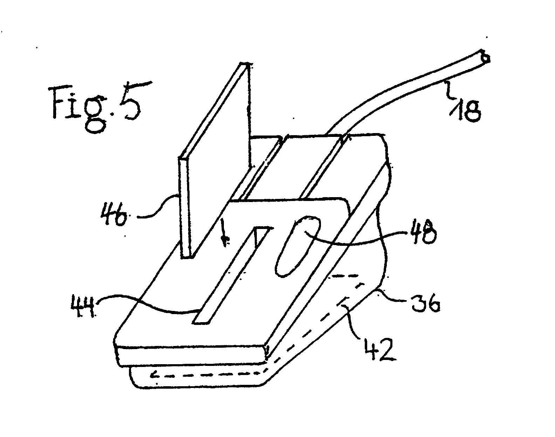

Fig. 5 zeigt eine Maus ähnlich Fig. 4 mit einem Schlitz zur Aufnahme eines Transponders 46 und zusätzlich einem biometrischen Sensor 48 im Gehäuse der Maus 36.

Alternativ kann die Tastatur 34 nach Fig. 3 ein darin integriertes Lesegerät und eine Aufnahme- und Halterungsvorrichtung für einen passiven Transponder 46 umfassen. Der Transponder 46 hat die Gestalt einer Scheckkarte und die Aufnahme- und Halterungsvorrichtung ist als Aufnahmeschlitz ausgebildet. Es wäre auch möglich, eine Ablagemulde vorzusehen, in der die Scheckkarte waagerecht abgelegt werden kann.

Ferner kann die Tastatur 34 nach Fig. 3 mit einem Schlitz zur Aufnahme eines Transponders 46 und zusätzlich einem biometrischen Sensor im Gehäuse der Tastatur 34 versehen sein.

Die Wirkungsweise eines Ausführungsbeispiels der Erfindung ist wie folgt. Zum Betrieb des Systems ist zunächst eine Installation erforderlich, und zu diesem Zweck ist das Lesegerät 42 des Transponders 64 anzuschließen und eine Software in üblicher Weise von Diskette oder CD zu laden. Die Anforderungen, die das Programm bzw. die Software erfüllen muß, ergeben sich von selbst aus den nachfolgenden Erläuterungen,

Wenn die Installationsdiskette von der Station 10, der als Arbeitsplatz eines Computer-Netzwerkes mit dem Betriebssystem Windows NT ausgestattet ist, gelesen wurde, ergeht eine Aufforderung an den Benutzer, durch Koppelung des Transponders 46 mit dem Lesegerät 42 die Übermittlung der Transponderdaten zu ermöglichen sowie durch Eingabe eines Passwortes oder durch Einlesen biometrischer Daten die Übermittlung der Identifikationsdaten zu ermöglichen. Ferner ergeht die Aufforderung an den Benutzer, die vom Administrator festgelegten und vom "Security Manager" für die LOGIN-Prozedur benötigten Daten einzugeben. Es erfolgt dann eine Zuordnung der Transponderdaten und der Identifikationsdaten zu den LOGIN-Daten und Speicherung dieser Daten.

Bei der Installation erfolgt so auch die Zuordnung der einzelnen Benutzer (user) zu den betreffenden Transpondern. Außerdem können auch noch die Benutzerrechte und Levels in der Station 10 vergeben, da unterschiedliche Benutzer auch unterschiedliche Zugriffsrechte zu verschiedenen Datenbanken und Speichern erhalten können. Sämtliche Daten können in der Station 10 oder bei Computernetzwerken auch in einer anderen zur selben Domäne gehörenden Station oder einem Server abgespeichert werden, so daß beim nächsten Einschalten der Station 10 das erfindungsgemäße System installiert ist.

Eine Deinstallation des Systems ist nur durch den Systembetreuer möglich oder durch den Benutzer, wenn sowohl die Autorisierungsdaten als auch die Identifikationsdaten eingegeben werden.

Nach der erfolgten Installation kann das System in der weiter oben beschriebenen Weise mit all seinen Vorteilen benutzt werden, wobei neben der hohen Sicherheit wegen der doppelten Prüfung vor allem auch die einfache Bedienung und Handhabung hervorzuheben ist.

## Patentansprüche

1. System zum Schutz einer mit wenigstens einer Bedienungsvorrichtung (34; 36) ausgestatteten Station (10) einer Datenverarbeitungseinrichtung vor unberechtigtem Zugriff bzw. zur ausschließlichen Nutzung durch einen autorisierten Benutzer, wobei dem Benutzer ein als Datenträger ausgebildeter Transponder (46) mit Autorisierungsdaten (22) zugeordnet ist, wobei ferner ein dem Transponder (46) zugeordnetes, als Sender und Empfänger ausgebildetes und mit der Station der Datenverarbeitungsvorrichtung über eine elektrische Leitung oder drahtlos verbundenes Lesegerät (42) an der Station (10) der Datenverarbeitungseinrichtung vorgesehen ist, welches Daten des Transponders (46) berührungslos abfragt, wenn sich der Transponder (46) im Wirkungsbereich des Lesegerätes (42) befindet, **dadurch gekennzeichnet, daß** das Lesegerät (42) in die Bedienungsvorrichtung (34; 36), die Station (10) selbst oder in ein sonstiges der Station (10) zugeordnetes Peripheriegerät (32) integriert ist, daß für eine Freigabe sowohl die im Transponder (46) gespeicherten Autorisierungsdaten (22) als auch zusätzlich benutzerspezifische Identifikationsdaten (24) ausgewertet werden und daß die Station (10) nur bei gemeinsamer Übereinstimmung der Autorisierungsdaten (22) und der Identifikationsdaten (24) mit in der Datenverarbeitungseinrichtung gespeicherten Vergleichsdaten zur Benutzung freigegeben wird.

2. System nach Anspruch 1, **dadurch gekennzeichnet, daß** sowohl die Autorisierungsdaten (22) als auch die Identifikationsdaten (24) zur Station (10) übertragen werden und beide Arten von Daten innerhalb der Datenverarbeitungseinrichtung mit dort gespeicherten Vergleichsdaten verglichen werden.

3. System nach Anspruch 1, **dadurch gekennzeichnet, daß** die Autorisierungsdaten (22) und die Identifikationsdaten (24) im Transponder (46) selbst oder im Lesegerät (42) auf Übereinstimmung geprüft werden und bei Übereinstimmung Freigabedaten (23) zur Station (10) übertragen werden, die mit dort gespeicherten Vergleichsdaten verglichen werden.

4. System nach einem der Ansprüche 1 bis 3, **dadurch gekennzeichnet, daß** bei Integration des Lesegerätes (42) in eine von der Station (10) örtlich abgesetzte Bedienungsvorrichtung (34; 36) oder in ein sonstiges der Station (10) zugeordnetes Peripheriegerät (32) dieselbe vorhandene Übertragungsstrecke und Schnittstelle zwischen der Bedienungsvorrichtung (34; 36) bzw. dem Peripheriegerät (32) einerseits und der Station (10) andererseits auch für die Datenübertragung vom Lesegerät. (42) zur Station (10) genutzt werden.

5. System nach einem der Ansprüche 1 bis 4, **dadurch gekennzeichnet, daß** die Datenkommunikation zwischen dem Lesegerät (42) und der Station (10) durch einen modifizierten Gerätetreiber der vorhandenen Bedienungsvorrichtung (34; 36) oder des vorhandenen Peripheriegerätes (32) oder durch einen zusätzlichen Gerätetreiber hergestellt wird.

6. System nach einem der Anspruch 1 bis 5, **dadurch gekennzeichnet, daß** das Gehäuse der Bedienungsvorrichtung (34; 36) oder des Peripheriegerätes (32) eine Aufnahme- und Halterungsvorrichtung (44) für den Transponder (46) umfaßt.

7. System nach einem der Ansprüche 1 bis 6, **dadurch gekennzeichnet, daß** die Identifikationsdaten (24) durch Eingabe eines Paßwortes auf der Bedienungsvorrichtung (34) erzeugt werden.

8. System nach einem der Ansprüche 1 bis 6, **dadurch gekennzeichnet, daß** die Identifikationsdaten (24) durch den Benutzer charakterisierende biometrische Daten erzeugt werden.

9. System nach Anspruch 8, **dadurch gekennzeichnet, daß** die biometrischen Daten des Benutzers von seinem äußeren Erscheinungsbild und/oder von seinem Gesicht abgeleitet sind.

10. System nach Anspruch 9, **dadurch gekennzeichnet, daß** an der Station (10) der Datenverarbeitungseinrichtung oder im den Transponder (46) enthaltenden Datenträger eine elektronische Kamera (38) zur Erfassung des Gesichts des Benutzers vorgesehen ist, und daß die Identifikationsdaten (24) aus den elektrischen Signalen der Kamera (38) erzeugt werden.

11. System nach Anspruch 8, **dadurch gekennzeichnet**, daβ die biometrischen Daten des Benutzers von seiner Stimme abgeleitet sind.

12. System nach Anspruch 11, **dadurch gekennzeichnet, daß** an der Station (10) der Datenverarbeitungseinrichtung oder im den Transponder enthaltenden Datenträger ein Mikrofon (40) zur Aufnahme der Stimme des Benutzers vorgesehen ist, und daß die Identifikationsdaten (24) aus den elektrischen Signalen des Mikrofons (40) erzeugt werden.

13. System nach Anspruch 8, **dadurch gekennzeichnet, daß** die biometrischen Daten des Benutzers von mindestens einem Finger- oder Handabdruck des Benutzers abgeleitet sind.

14. System nach Anspruch 13, **dadurch gekennzeichnet, daß** die Datenverarbeitungseinrichtung oder der den Transponder (46) enthaltende Datenträger eine Erkennungsvorrichtung in Form eines Sensors (48) für Finger- oder Handabdrücke umfaßt.

15. System nach einem der Ansprüche 8 bis 14, **dadurch gekennzeichnet, daß** die Identifikationsdaten (24) durch Kombination mindestens zweier auf unterschiedliche Art ermittelten biometrischen Daten des Benutzers bestimmt werden.

16. System einem der vorhergehenden Ansprüche 1 bis 15, **dadurch gekennzeichnet, daß** die Autorisierungsdaten (22) und die Identifikationsdaten (24) oder die Freigabedaten (23) durch ein Benutzerverwaltungsprogramm im Betriebssystem der Datenverarbeitungseinrichtung geprüft werden.

17. System nach Anspruch 16, **dadurch gekennzeichnet, daß** bei einer mit dem Betriebssystem "Windows NT" ausgestatteten Datenverarbeitungseinrichtung die Prüfung der Autorisierungsdaten (22) und der Identifikationsdaten (24) oder der Freigabedaten durch das für die Anmeldeprozedur zuständige Sicherheitssubsystem oder den "Security Manager" des Betriebssystems vorgenommen wird.

18. System nach einem der vorhergehenden Ansprüche 1 - 15, **dadurch, gekennzeichnet, daß** die Autorisierungsdaten (22) und/oder die Identifikationsdaten (24) oder die Freigabedaten (23) kontinuierlich gelesen werden und somit die stetige Anwesenheit des Benutzers bzw. des Transponders (46) im Wirkungsbereich des Lesegerätes (42) überwacht wird.

19. System nach Anspruch 18, **dadurch gekennzeichnet, daß** eine als Timer arbeitende Zeitschaltung (28) vorgesehen ist, durch welche die kontinuierliche Überwachung auf eine wählbare Zeitdauer beschränkt ist.

20. System nach einem der Ansprüche 1 bis 19, **dadurch gekennzeichnet, daß** der Transponder (46) berührungslos mit Zusatzdaten programmierbar ist, welche Bestandteil der der Freigabeeinheit zugeführten Autorisierungsdaten (22) sind.

21. System nach Anspruch 20, **dadurch gekennzeichnet, daß** die Zusatzdaten Zeitdaten zur Bestimmung der Benutzungsdauer der Station sowie gegebenenfalls zur Gebührenberechnung einer entgeltlichen Benutzung der Station (10) sind.

22. System nach einem der Ansprüche 18 bis 21, **dadurch gekennzeichnet, daß** die Freigabeschaltung (26) die Benutzung der Station (10) nur solange freigibt, wie vom Lesegerät (42) die Autorisierungsdaten (22) des Transponders (46) gelesen werden können.

23. System nach Anspruch 19, **dadurch gekennzeichnet, daß** nach Ablauf einer definierbaren Zeitdauer eine Aufforderung an den Benutzer veranlaßt wird, zumindest das Paßwort erneut einzugeben bzw. seine biometrischen Daten erneut erfassen zu lassen.

24. System nach einem der Ansprüche 18 bis 23, **dadurch gekennzeichnet, daß** die Benutzung der Station (10) auch dann freigegeben bleibt, wenn sich der Transponder (46) nur innerhalb einer definierbaren Zeitdauer außerhalb des Wirkungsbereiches des Lesegerätes (42) befindet und die Autorisierungsdaten (22) während dieser Zeitdauer nicht gelesen und der Station (10) nicht zugeführt werden können.

25. System nach einem der Ansprüche 1 bis 24, **dadurch gekennzeichnet, daß** die tatsächliche freigegebene Benutzungsdauer in der Station (10) protokolliert und gespeichert wird.

26. System nach einem der Ansprüche 1 bis 25, **dadurch gekennzeichnet, daß** die Daten (22) vom Transponder (46) zum Lesegerät (42) in verschlüsselter Form übertragen werden.

27. System nach einem der Ansprüche 18 bis 26, **dadurch gekennzeichnet, daß** ein automatisches Ausloggen des Benutzers erfolgt, wenn der Transponder (46) den Wirkungsbereich des Lesegerätes (42) verläßt.

28. System nach einem der Ansprüche 1 bis 27, **dadurch gekennzeichnet, daß** der Transponder (46) zusätzlich zu den Autorisierungsdaten (22) auch noch die Identifikationsdaten (24) des Benutzers enthält.

## Claims

1. System for the protection of a station (10) of a data processing device equipped with at least one operating mechanism (34; 36) against unauthorized access or for exclusive use by an authorized user with whom is associated a transponder (46) with authorization data (22) constructed as a storage medium and at the station (10) of the data processing device is provided a reader (42) connected via an electric line or in wireless manner to the data processing device station and constructed as a transmitter and receiver being associated with the transponder (46) and which polls in non-contacting manner data from the transponder (46) when the latter is in the effective range of the reader (42), **characterized in that** the reader (42) is integrated into the operating mechanism (34; 36), the station (10) or in a miscellaneous peripheral (32) associated with the station (10), that for enable purposes both the authorization data (22) stored in the transponder (46) and additional user-specific identification data (24) are evaluated and that the station is only enabled for use in the case of joint coincidence of the authorization data (22) and identification data (24) with comparison data stored in the data processing device.

2. System according to claim 1, **characterized in that** both the authorization data (22) and the identification data (24) are transmitted to the station (10) and both types of data are compared within the data processing device with comparison data stored there.

3. System according to claim 1, **characterized in that** the authorization data (22) and the identification data (24) are checked for coincidence in the transponder (46) or in the reader (42) and in the case of coincidence enable data (23) are transmitted to the station (10) and compared with comparison data stored there.

4. System according to one of the claims 1 to 3, **characterized in that** in the case of integration of the reader (42) into an operating mechanism (34; 36) locally removed from the station (10) or in a miscellaneous peripheral (32) associated with the station (10) use is made of the same existing transmission path and interface between the operating mechanism (34; 36) or the peripheral (32) on the one hand and the station (10) on the other for the purposes of data transmission from the reader (42) to the station (10).

5. System according to one of the claims 1 to 4, **characterized in that** data communication between the reader (42) and the station (10) is brought about by a modified device driver of the existing operating mechanism (34; 36) or the existing peripheral (32) or an additional device driver.

6. System according to one of the claims 1 to 5, **characterized in that** the . housing of the operating mechanism (34; 36) or peripheral (32) incorporates a receiving and holding device (44) for the transponder (46).

7. System according to one of the claims 1 to 6, **characterized in that** identification data (24) are produced by entering a password in the operating mechanism (34).

8. System according to one of the claims 1 to 6, **characterized in that** the identification data (24) are produced by user-characterizing, biometric data.

9. System according to claim 8, **characterized in that** the user biometric data are derived from his external appearance and/or his face.

10. System according to claim 9, **characterized in that** a camera (38) for recording the face of the user is provided at the data processing device station (10) or in the storage medium containing the transponder (46) and that the identification data (24) are produced from electric signals of the camera (38).

11. System according to claim 8, **characterized in that** the user biometric data are derived from his voice.

12. System according to claim 11, **characterized in that** a microphone (40) for recording the voice of the user is provided at the data processing device station (10) or in the storage medium containing the transponder and that the identification data (24) are produced from the electrical signals of the microphone (40).

13. System according to claim 8, **characterized in that** the biometric data of the user are derived from at least one user finger or hand print.

14. System according to claim 13, **characterized in that** the data processing device or the storage medium containing the transponder (46) incorporates an identification device in the form of a sensor (48) for finger or hand prints.

15. System according to one of the claims 8 to 14, **characterized in that** the identification data (24) are determined by the combination of at least two user biometric data determined in different ways.

16. System according to one of the claims 1 to 15, **characterized in that** the authorization data (22) and identification data (24) or enable data (23) are checked by a user management program in the operating system of the data processing device.

17. System according to claim 16, **characterized in that** in the case of a data processing device equipped with the "Windows NT" operating system, the checking of the authorization data (22) and identification data (24) or the enable data is carried out by the security subsystem competent for the logon procedure or the security manager of. the operating system.

18. System according to one of the claims 1 to 15, **characterized in that** the authorization data (22) and/or identification data (24) or the enable data (23) are continuously read and consequently the continuous presence of the user or the transponder (46) in the effective range of the reader (42) is monitored.

19. System according to claim 18, **characterized in that** there is a timing circuit (28) functioning as a timer and through which the continuous monitoring is limited to a selectable time period.

20. System according to one of the claims 1 to 19, **characterized in that** the transponder (46) is programmable in non-contacting manner with additional data forming part of the authorization, data (22) supplied to the enable unit.

21. System according to claim 20, **characterized in that** the additional data are time data for determining the user period of the station and optionally for fee calculation in the case of a payment-requiring use of the station (10) .

22. System according to one of the claims 18 to 21, **characterized in that** the enable circuit (26) only enables use of the station (10) for as long as the reader (42) can read the authorization data (22) of the transponder (46).

23. System according to claim 19, **characterized in that** at the end of a definable time period a request is made to the user to at least again enter the password or again to allow his biometric data to be recorded.

24. System according to one of the claims 18 to 23, **characterized in that** the use of the station (10) is still enabled if the transponder (46) is outside the effective range of the reader (42) only within a definable time period and the authorization data (22) are not read during this time period and cannot be supplied to the station (10).

25. System according to one of the claims 1 to 24, **characterized in that** the actually enabled use period is protocolled and stored in the station (10).

26. System according to one of the claims 1 to 25, **characterized in that** the data (22) are transmitted in encrypted form from transponder (46) to reader (42).

27. System according to one of the claims 18 to 26, **characterized in that** there is an automatic logging off of the user if the transponder (46) leaves the effective range of the reader (42).

28. System according to one of the claims 1 to 27, **characterized in that**, in addition to the authorization data (22), the transponder (46) also contains the user identification data (24).

## Revendications

1. Système destiné à protéger une station d'ordinateur (10), équipée d'un dispositif de commande (34, 36) au moins, contre l'accès non autorisé permettant exclusivement l'utilisation par un utilisateur autorisé, auquel est associé un transpondeur (46) conçu comme support de données, avec des données d'autorisation (22), un lecteur (42) étant prévu, en outre, à la station d'ordinateur (10), à laquelle il est relié au moyen d'une ligne électrique ou sans fil, lecteur qui est conçu comme émetteur-récepteur et associé au transpondeur (46), dont il interroge les données sans contact, lorsque le transpondeur (46) se trouve dans le champ d'action du lecteur (42), **caractérisé en ce que** le lecteur (42) est intégré dans le dispositif de commande (34, 36), dans la station (10) elle-même ou dans une autre unité périphérique associée à la station (10), qu'une libération nécessite l'évaluation non seulement des données d'autorisation (22) mémorisées dans le transpondeur (46), mais encore des données d'identification spécifiques de l'utilisateur (24) et que l'autorisation d'accès à la station (10) en vue de son utilisation n'est donnée que s'il y a concordance commune des données d'autorisation (22) et des données d'identification (24) avec les données de référence mémorisées dans l'ordinateur.

2. Système suivant la revendication 1, **caractérisé en ce qu**'aussi bien les données d'autorisation (22) que les données d'identification (24) sont transmises à la station (10) et que l'ordinateur compare les deux types de données aux données de référence qu'il a mémorisées.

3. Système suivant la revendication 1, **caractérisé en ce que** la concordance des données d'autorisation (22) et des données d'identification (24) est vérifiée dans le transpondeur (46) lui-même ou dans le lecteur (42) et qu'en cas de concordance, des données de libération (23) sont transmises à la station (10), où elles sont comparées à des données de référence, qui y sont mémorisées.

4. Système suivant une des revendications 1 à 3, **caractérisé en ce qu** 'en cas d'intégration du lecteur (42) dans un dispositif de commande (34, 36) localement déporté par rapport à la station (10) ou dans une autre unité périphérique (32) associée à la station (10), la même liaison de transmission et la même interface existantes entre le dispositif de commande (34, 36) ou l'unité périphérique (32), d'une part, et la station (10), d'autre part, sont également utilisées pour la transmission des données du lecteur (42) à la station (10).

5. Système suivant une des revendications 1 à 4, **caractérisé en ce que** la communication de données entre le lecteur (42) et la station (10) est réalisée par un pilote de périphérique modifié du dispositif de commande (34, 36) existant ou de l'unité périphérique (32) existante ou par un pilote supplémentaire.

6. Système suivant une des revendications 1 à 5, **caractérisé en ce que** le boîtier du dispositif de commande (34, 36) ou de l'unité périphérique (32) comprend un dispositif de réception ou de support (44) pour le transpondeur (46).

7. Système suivant une des revendications 1 à 6, **caractérisé en ce que** les données d'identification (24) sont générées par l'entrée d'un mot de passe sur le dispositif de commande (34).

8. Système suivant une des revendications 1 à 6, **caractérisé en ce que** les données d'identification (24) sont générées par des données biométriques qui caractérisent l'utilisateur.

9. Système suivant la revendication 8, **caractérisé en ce que** les données biométriques de l'utilisateur sont dérivées de son aspect physique et/ou de son visage.

10. Système suivant la revendication 9, **caractérisé en ce qu'une** caméra électronique (38) est prévue à la station (10) d'ordinateur ou dans le support de données contenant le transpondeur (46) pour l'enregistrement du visage de l'utilisateur, et **en ce que** les données d'identification (24) sont générées à partir des signaux électriques de la caméra (38).

11. Système suivant la revendication 8, **caractérisé en ce que** que les données biométriques de l'utilisateur sont dérivées de sa voix.

12. Système suivant la revendication 11, **caractérisé en ce qu**'un microphone (40) est prévu à la station d'ordinateur (10) ou dans le support de données contenant le transpondeur pour l'enregistrement de la voix de l'utilisateur et que les données d'identification (24) sont générées à partir des signaux électriques du microphone (40).

13. Système suivant la revendication 8, **caractérisé en ce que** les données biométriques de l'utilisateur sont dérivées d'une empreinte digitale ou manuelle au moins de l'utilisateur.

14. Système suivant la revendication 13, **caractérisé en ce que** l'ordinateur ou le support de données contenant le transpondeur (46) comprend un dispositif de reconnaissance sous forme de détecteur (48) d'empreintes digitales ou manuelles.

15. Système suivant une des revendications 8 à 14, **caractérisé en ce que** les données d'identification (24) sont fixées par combinaison de deux données biométriques de l'utilisateur qui sont déterminées de façon différente.

16. Système suivant une des revendications 1 à 15, **caractérisé en ce que** les données d'autorisation (22) et les données d'identification (24) ou les données de libération sont examinées par un programme de gestion d'utilisateur dans le système d'exploitation de l'ordinateur.

17. Système suivant la revendication 16, **caractérisé en ce que** l'examen des données d'autorisation (22) et des données d'identification (24) ou des données de libération est effectué par le sous-système de sécurité compétent en ce qui concerne la procédure d'entrée ou par le « gestionnaire de sécurité » du système d'exploitation dans le cas d'un ordinateur équipé du système d'exploitation « Windows NT ».

18. Système suivant une des revendications 1 à 15, **caractérisé en ce que** les données d'autorisation (22) et/ou les données d'identification (24) ou les données de libération (23) sont lues continuellement et que, par conséquent, la présence permanente de l'utilisateur, à savoir du transpondeur (46) dans le champ d'action du lecteur (42) est surveillée.

19. Système suivant la revendication 18, **caractérisé en ce qu'**est prévu un circuit de synchronisation (28), qui fonctionne comme une horloge à minuterie, grâce auquel la surveillance permanente peut être limitée à une durée de temps pouvant être choisie.

20. Système suivant une des revendications 1 à 19, **caractérisé en ce que** le transpondeur (46) peut être programmé, sans contact, avec des données complémentaires qui font partie des données d'autorisation (22) amenées à l'unité de libération.

21. Système suivant la revendication 20, **caractérisé en ce que** les données complémentaires sont des données de temps servant à déterminer la durée d'utilisation de la station, ainsi que, le cas échéant, à la taxation d'une utilisation payante de la station (10).

22. Système suivant une des revendications 18 à 21, **caractérisé en ce que** le circuit de libération (26) permet l'utilisation de la station (10) uniquement pendant le temps que les données d'autorisation (22) du transpondeur (46) peuvent être lues par le transpondeur (46).

23. Système suivant la revendication 19, **caractérisé en ce qu'** après expiration d'une durée de temps pouvant être définie, une invitation de l'utilisateur à entrer à nouveau le mot de passe ou à saisir à nouveau ses données biométriques est générée.

24. Système suivant une des revendications 18 à 23, **caractérisé en ce que** l'utilisation de la station (10) reste libérée même lorsque le transpondeur (46). se trouve à l'extérieur du champ d'action du lecteur (42) uniquement pendant une durée de temps pouvant être définie et que les données d'autorisation (22) ne sont pas lues pendant cette période et ne peuvent pas être amenées à la station (10).

25. Système suivant une des revendications 1 à 24, **caractérisé en ce que** la durée d'utilisation réellement autorisée est consignée et mémorisée dans la station (10).

26. Système suivant une des revendications 1 à 25, **caractérisé en ce que** les données (22) sont transmises du transpondeur (46) au lecteur (42) sous forme codée.

27. Système suivant une des revendications 18 à 26, **caractérisé en ce qu'**une sortie automatique de l'utilisateur a lieu lorsque le transpondeur (46) quitte le champ d'action du lecteur (42).

28. Système suivant une des revendications 1 à 27, **caractérisé en ce que** le transpondeur (46) contient les données d'identification (24) de l'utilisateur, en plus des données d'autorisation (22).
